# EUROPÄISCHE PATENTANMELDUNG

(11) **EP 1 484 655 A1**
(43) Veröffentlichungstag der Anmeldung: **08.12.2004**
(21) Anmeldenummer: 03012937.3
(22) Anmeldetag: 06.06.2003
(51) Int. Cl.: G05B 19/042

(54) **Ermittlung einer Reaktionszeit eines Steuerungssystems**

(71) Anmelder: SIEMENS AKTIENGESELLSCHAFT, 80333 München (DE)
(72) Erfinder: Barthel, Herbert, 91074 Herzogenaurach (DE); Fuchs, Heiner, 91056 Erlangen (DE); Krüger, Richard, 85053 Ingolstadt (DE); Schenk, Andreas, 91052 Erlangen (DE)

(57) **Zusammenfassung**

Die Erfindung betrifft ein Verfahren sowie eine Vorrichtung zur Ermittlung mindestens einer Reaktionszeit (24) eines Steuerungssystems (1) sowie Eingangselemente (5), Ausgangselemente (11) oder weitere Komponenten (6 - 10) eines Steuerungssystems (1). Zur Vereinfachung der Ermittlung mindestens einer Reaktionszeit eines Steuerungssystems (1) wird vorgeschlagen, dass die Reaktionszeit (24) aus jeweils einem Eingangselement (5), einem Ausgangselement (11) und weiteren Komponenten (6 -10) des Steuerungssystems (1) zugeordneten Informationen (18) automatisch ermittelt wird, wobei die Reaktionszeit (24) die zwischen dem Erfassen eines Eingangssignals im Eingangselement (5) des Steuerungssystems (1) und der Ausgabe eines durch das Eingangssignal veranlassten Ausgangssignals durch das Ausgangselement (11) des Steuerungssystems (1) verstrichene Zeit umfasst.

## Beschreibung

Die Erfindung betrifft ein Verfahren sowie eine Vorrichtung zur Ermittlung mindestens einer Reaktionszeit eines Steuerungssystems, sowie ein Eingangselement, Ausgangselement bzw. eine weitere Komponente eines solchen Steuerungssystems.

Ein solches Verfahren findet insbesondere Anwendung in industriellen Automatisierungssystemen. Die DE 199 22 561 A1 beschreibt ein Verfahren zur sicheren Übertragung von Datensignalen über ein Bussystem, bei welchem die Datensignale von zumindest einem Sensor erzeugt und über das Bussystem zu mindestens einem Aktor übertragen werden. Die von zumindest einem der Sensoren erzeugten Datensignale werden vor Einleitung in das Bussystem gemäß einem vorgegebenen Sicherheitscodierverfahren codiert. Anschließend werden die codierten Datensignale in das Bussystem eingespeist und über dieses übertragen. Die codierten Datensignale werden von zumindest einem der Aktoren empfangen und gemäß einem dem vorgegebenen Sicherheitscodierverfahren entsprechenden Decodierverfahren decodiert. Weiterhin wird ein elektronisches Überwachungssystem zum Durchführen dieses Verfahrens beschrieben.

Der Erfindung liegt die Aufgabe zugrunde, die Ermittlung mindestens einer Reaktionszeit eines Steuerungssystems zu vereinfachen.

Diese Aufgabe wird durch ein Verfahren zur Ermittlung mindestens einer Reaktionszeit eines Steuerungssystems gelöst, wobei die Reaktionszeit die zwischen dem Erfassen eines Eingangssignals in einem Eingangselement des Steuerungssystems und der Ausgabe eines durch das Eingangssignal veranlassten Ausgangssignals durch ein Ausgangselement des Steuerungssystems verstrichene Zeit umfasst, bei welchem Verfahren die Reaktionszeit aus jeweils dem Eingangselement, dem Ausgangselement und weiteren Komponenten des Steuerungssystems zugeordneten Informationen automatisch ermittelt wird.

Diese Aufgabe wird durch eine Vorrichtung zur Ermittlung mindestens einer Reaktionszeit eines Steuerungssystems gelöst, wobei die Reaktionszeit die zwischen dem Erfassen eines Eingangssignals in einem Eingangselement des Steuerungssystems und der Ausgabe eines durch das Eingangssignal veranlassten Ausgangssignals durch ein Ausgangselement des Steuerungssystems verstrichene Zeit umfasst, wobei die Vorrichtung Mittel zur automatischen Ermittlung der Reaktionszeit aus jeweils dem Eingangselement, dem Ausgangselement und weiteren Komponenten des Steuerungssystems zugeordneten Informationen aufweist.

Diese Aufgabe wird durch ein Eingangselement, ein Ausgangselement bzw. weitere Komponenten eines Steuerungssystems gelöst, mit diesen Komponenten zugeordneten Informationen, welche zur automatischen Ermittlung mindestens einer Reaktionszeit des Steuerungssystems verwendbar sind, wobei die Reaktionszeit die zwischen dem Erfassen eines Eingangssignals im Eingangselement des Steuerungssystems und der Ausgabe eines durch das Eingangssignal veranlassten Ausgangssignals durch das Ausgangselement des Steuerungssystems verstrichene Zeit umfasst.

Um die Reaktionszeit eines Steuerungssystems vom Sensor bis zum Aktor zu ermitteln ist bisher das mühsame händische Zusammensammeln der in Gerätehandbüchern der einzelnen Komponenten des Steuerungssystems angegebenen maximalen Reaktionszeiten erforderlich. Die angegebenen maximalen Reaktionszeiten der einzelnen Komponenten können zudem abhängig von Parametereinstellungen der Komponente variieren. Die einzelnen Zahlenwerte werden üblicherweise in eine mit einem Tabellenkalkulationsprogramm bearbeitbare Datei übernommen und aufaddiert. Diese Art der Ermittlung einer Reaktionszeit ist jedoch weder fehlersicher noch führt sie zu einem zufriedenstellenden Ergebnis, da üblicherweise jeweils die maximalen Reaktionszeiten der einzelnen Komponenten herangezogen werden. Die Erfindung bietet eine überraschend einfache Lösung, um die Gefahr menschlichen Versagens beim Zusammenstellen und Auswerten der Daten auszuschalten und auf einfachere Weise bessere Ergebnisse zu erhalten.

Gemäß einer vorteilhaften Ausgestaltung der Erfindung wird eine sicherheitsrelevante Reaktionszeit eines sicherheitsgerichteten Steuerungssystems ermittelt. In der Sicherheitstechnik relevant ist die zwischen dem Erfassen eines Eingangssignals in einem Eingangselement des Steuerungssystems und der Ausgabe eines durch das Eingangssignal veranlassten Ausgangssignals durch ein Ausgangselement des Steuerungssystems verstrichene Zeit relevant, d. h. im Falle der Sicherheitstechnik die Zeit vom "elektrischen" Erkennen einer sicherheitsrelevanten Signalanforderung bis zum "elektrischen" Einleiten der Sicherheitsreaktion, also die Gesamtreaktionszeit des Steuerungssystems. Das Sicherheitsprofil benötigt gegenüber dem Standardprofil zusätzliche Bearbeitungszeiten (z. B. für sicherheitsspezifische Software-Treiber). Die Gesamtreaktionszeit ist sicherheitsrelevant und darf auf keinen Fall die sogenannte Prozessfehlertoleranzzeit überschreiten. Zudem genügt das vorgeschlagene Verfahren einem offenen Standard, so dass z. B. an einem sicheren Feldbus unterschiedlichste Hersteller ihre Geräte betreiben können und Ergebnisse mit geprüfter Sicherheit geliefert werden können.

Da sich die Reaktionszeit eines Steuerungssystems üblicherweise aus den einzelnen Reaktionszeiten der Komponenten des Steuerungssystems zusammensetzt, enthalten die den Komponenten des Steuerungssystems zugeordneten Informationen gemäß einer weiteren Ausgestaltung der Erfindung jeweils Reaktionszeiten oder eine Formel zur Berechnung von Reaktionszeiten des Eingangselements, des Ausgangselements bzw. der weiteren Komponenten des Steuerungssystems. Zu den Reaktionszeiten der Komponenten zählen dabei auch Übertragungszeiten der einzelnen Kommunikationsstrecken, z. B. Busübertragungszeiten, Zykluszeiten von CPUs, usw. Reaktionszeiten der einzelnen Komponente, welche z. B. abhängig von Parametereinstellungen der Komponente variieren können, werden vorteilhafterweise durch eine Formel zur Berechnung der Reaktionszeit abgebildet.

Die maximale Reaktionszeit vom Eingangselement zum Ausgangselement des Steuerungssystems, z. B. vom Sensor zum Aktor, setzt sich zusammen aus den maximalen Reaktionszeiten der einzelnen Komponenten im Signalfluss vom Eingangselement zum Ausgangselement. Da die maximalen Reaktionszeiten der einzelnen Komponenten im Allgemeinen bei Auftreten eines Fehlers wesentlich länger als im fehlerfreien Normalfall sind, ist es sinnvoll, zwischen einer "maximalen Reaktionszeit im Fehlerfall" und einer "maximalen Reaktionszeit im fehlerfreien Fall" zu unterscheiden. Daher wird gemäß einer weiteren vorteilhaften Ausgestaltung der Erfindung eine maximale Reaktionszeit des Steuerungssystems im Fehlerfall und eine maximale Reaktionszeit des Steuerungssystems im fehlerfreien Fall ermittelt. Die "maximale Reaktionszeit im Fehlerfall" kann z. B. durch eine Überwachungszeit bestimmt sein.

Zum herstellerunabhängigen Einsatz der Erfindung ist es von Vorteil, wenn gemäß einer weiteren Ausgestaltung der Erfindung die Informationen als Gerätestammdaten (= GSD) hinterlegt sind. Die Informationen können insbesondere in einer erweiterbaren Auszeichnungssprache, z. B. XML (= Extensible Markup Language) beschrieben sein, oder als Metawissen der Komponente zur Verfügung gestellt werden.

Gemäß einer weiteren vorteilhaften Ausgestaltung der Erfindung enthalten die den Komponenten des Steuerungssystems zugeordneten Informationen jeweils eine maximale Reaktionszeit im Fehlerfall, eine maximale Reaktionszeit im fehlerfreien Fall sowie eine typische Reaktionszeit des Eingangselements, des Ausgangselements bzw. der weiteren Komponenten des Steuerungssystems. Auf Basis dieser Informationen kann eine maximale Reaktionszeit im Fehlerfall, eine maximale Reaktionszeit im fehlerfreien Fall sowie eine typische Reaktionszeit des Steuerungssystem ermittelt werden. Zudem können anwendungsabhängig beliebige Kombinationen der unterschiedlichen Arten der Reaktionszeiten der Komponenten zur Ermittlung einer Reaktionszeit des Steuerungssystems herangezogen werden.

Insbesondere für sicherheitsgerichtete Anwendungen ist es vorteilhaft, wenn gemäß einer weiteren Ausgestaltung der Erfindung den hinterlegten Informationen Sicherheitsmittel zugeordnet werden. Durch die Sicherheitsmittel, z. B. Signaturen, Verschlüsselungen, definierte und standardisierte Namen, etc. können alle sicherheitsrelevanten Informationen abgesichert werden. Die Korrektheit und Unversehrtheit der hinterlegten Informationen, z. B. angegebene Reaktionszeiten, können so bei bzw. vor der Nutzung der Informationen zur Ermittlung einer Reaktionszeit anhand der Sicherheitsmittel überprüft werden. Hierdurch wird es möglich eine sicherheitsrelevante Aussage zur derart ermittelten Reaktionszeit bereitzustellen. Sicherheitsmittel können auch Programmen, Programmteilen, Makros, Funktionen und Ähnlichem zugeordnet werden.

Bei der bisher üblichen händischen Ermittlung von Reaktionszeiten werden die jeweiligen maximalen Reaktionszeiten der Komponenten im Fehlerfall zur Berechnung herangezogen. Diese werden addiert, das Ergebnis der Addition ist die Gesamtreaktionszeit. Dies führt zu unnötig hohen Anforderungen an die beteiligten Komponenten und ist auch aus sicherheitstechnischen Gründen nicht erforderlich, da man bei übliche Sicherheitsanforderungen von maximal einem Fehler (z. B. SIL 2; SIL = Security Integrity Level) oder von maximal zwei Fehlern (SIL 3) zu einem Zeitpunkt ausgehen muss. Es muss nach den Sicherheitsanforderungen (z.B. gemäß IEC 61508) nicht von beliebig vielen gleichzeitigen Fehlern ausgegangen werden, sondern nur von zeitlich gestaffelt auftretenden Fehlern. Gemäß einer weiteren vorteilhaften Ausgestaltung der Erfindung wird daher zur Ermittlung einer maximalen Reaktionszeit des Steuerungssystems im Fehlerfall bei einer durch Sicherheitsanforderungen bestimmten Anzahl von Komponenten des Steuerungssystems jeweils die maximale Reaktionszeit der Komponente im Fehlerfall verwendet und bei den übrigen Komponenten jeweils die maximale Reaktionszeit der Komponenten im fehlerfreien Fall verwendet.

Wenn ein Fehler erkannt und behoben wird, bevor ein zweiter Fehler in einer anderen Komponente auftritt und ein Fehler sich nicht auf die maximale Reaktionszeit mehrerer Komponenten auswirkt, muss bei der Berechnung der maximalen Reaktionszeit nur bei einer Komponente im Signalfluss die "maximale Reaktionszeit im Fehlerfall" angesetzt werden. Für alle anderen Komponenten kann die wesentlich kleinere "maximale Reaktionszeit im fehlerfreien Fall" angesetzt werden. Besonders vorteilhaft ist dabei, wenn gemäß einer weiteren Ausgestaltung der Erfindung zur Ermittlung einer maximalen Reaktionszeit des Steuerungssystems im Fehlerfall die maximale Reaktionszeit im Fehlerfall der Komponente mit der im Vergleich größten maximalen Reaktionszeit im Fehlerfall verwendet wird und bei den übrigen Komponenten die maximale Reaktionszeit der Komponenten im fehlerfreien Fall verwendet wird.

Nachfolgend wird die Erfindung anhand der in den Figuren dargestellten Ausführungsbeispiele näher beschrieben und erläutert.

Es zeigen:
- FIG 1: eine schematische Darstellung eines Steuerungssystems sowie eine Vorrichtung zur Ermittlung mindestens einer Reaktionszeit des Steuerungssystems,
- FIG 2: die Kommunikation zwischen Komponenten eines Steuerungssystems und
- FIG 3: ein weiteres Ausführungsbeispiel eines Verfahrens zur Ermittlung einer Reaktionszeit.

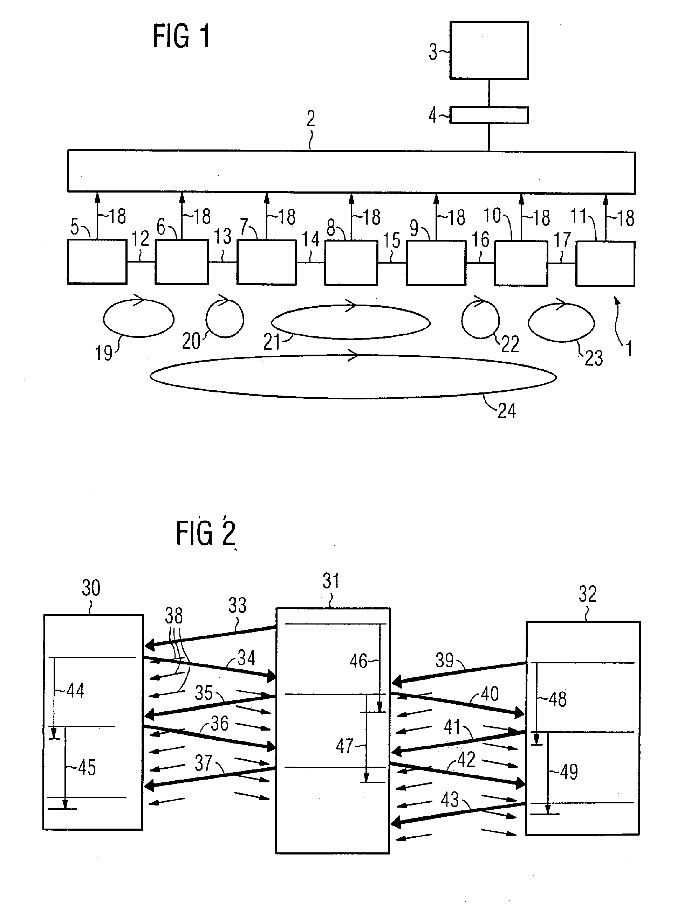

FIG 1 zeigt in schematischer Darstellung ein Steuerungssystem 1 sowie eine Vorrichtung 2 zur Ermittlung mindestens einer Reaktionszeit des Steuerungssystems 1. Das Steuerungssystem 1 weist Komponenten 5 - 11 auf, welche mittels Kommunikationsmitteln 12 - 17 verbunden sind. Bei den Komponenten 5 - 11 des Steuerungssystems 1 handelt es sich u. a. um ein Eingangselement 5, ein Ausgangselement 11 sowie weitere Komponenten 6 - 10. Den Komponenten 5 - 11 sind Informationen 18 zugeordnet. Diese Informationen 18 werden vom Projektierungssystem 2 zur Ermittlung mindestens einer Reaktionszeit des Steuerungssystems 1 genutzt. Die Informationen 18 können in hier nicht dargestellten Speichermitteln gespeichert sein. Speichermittel können z. B. in die Komponenten integrierte RAM- oder ROM-Bausteine (RAM = Random Access Memory, ROM = Read Only Memory), transportable Speichermedien wie Memorycards und Ähnliches sein. Die Informationen können auch über das Internet verfügbar sein und/oder auf transportablen Speichermedien, z. B. in Form von Geräte-Stammdaten, dem Projektierungssystem zur Verfügung stehen. Der Hersteller bzw. der Lieferant einer Komponente 5 - 11 kann die der jeweiligen Komponente zugeordnete Information 18 auf seiner Homepage zum Herunterladen zur Verfügung stellen oder mit der jeweiligen Komponente z. B. eine CD-ROM liefern, auf welcher die Informationen 18 gespeichert sind. Das Projektierungssystem 2 ist mit einer Mensch-Maschine-Schnittstelle 3, 4 gekoppelt. Die Mensch-Maschine-Schnittstelle 3, 4 enthält einen Bildschirm, Lautsprecher, eine Tastatur und weitere Eingabemittel. Mit den Bezugszeichen 19 - 24 sind als Kreise bzw. Ellipsen symbolisierte Reaktionszeiten der Komponenten 5 - 11 sowie der Kommunikationsmittel 12 - 17 bezeichnet.

Anhand FIG 1 soll im Folgenden ein Verfahren zur Ermittlung mindestens einer Reaktionszeit des Steuerungssystems 1 beispielhaft erläutert werden. Bei dem in FIG 1 dargestellten Steuerungssystem 1 handelt es sich um ein sicherheitsgerichtetes Automatisierungssystem für die Fertigungs- und Prozessautomatisierung. Das Steuerungssystem 1 ist in dezentraler Feldbustechnik aufgebaut, z. B. gemäß dem standardisierten Kommunikationssystem PROFIBUS (IEC 61158) bzw. dem PROFIsafe-Profil. Insofern ist das Eingangselement 5 im Ausführungsbeispiel der FIG 1 ein DP-Eingangsmodul (DP = dezentrale Peripherie). Das Ausgangselement 11 ist in diesem Fall ein DP-Ausgangsmodul. Die weiteren Komponenten 6 - 10 des Steuerungssystems 1 sind DP-Slaves (Komponenten 6 bzw. 10), DP-Master (Komponenten 7 bzw. 9) sowie eine F-CPU (sicherheitsgerichtete Zentraleinheit, Komponente 8). Zur Projektierung des Steuerungssystems 1 ist ein Projektierungssystem 2 vorgesehen, welches durch eine Mensch-Maschinen-Schnittstelle 3, 4 durch einen Anwender bedient werden kann bzw. Informationen an den Anwender weitergeben kann.

Mit Hilfe des Projektierungssystems 2 soll eine Reaktionszeit vom Eingang (Failsafe-Sensor) bis zum Ausgang (Failsafe-Aktor) über mehrere Kommunikationsstrecken ermittelt werden. Als Reaktionszeit wird dabei die in der Sicherheitstechnik relevante Zeit bezeichnet, welche vom "elektrischen" Erkennen einer sicherheitsrelevanten Signalanforderung bis zum "elektrischen" Einleiten der Sicherheitsreaktion vergeht. Diese Reaktionszeit setzt sich aus mehreren Einzelzeiten zusammen, u. a. den Busübertragungszeiten. Die gesamte Reaktionszeit 24 des Steuerungssystems 1 vom Eingangselement 5 bis zum Ausgangselement 11 ist in FIG 1 als Ellipse dargestellt. Diese gesamte Reaktionszeit 24 setzt sich aus einzelnen Reaktionszeiten 19 - 23 zusammen. Dies sind u. a. die Eingangsverzögerung des fehlersicheren DP-Eingangsmoduls (verursacht durch die Bearbeitungszeit) sowie der Busübertragungszeit zum DP-Slave, hier symbolisiert durch die Ellipse 19. Eine weitere Reaktionszeit, welche zur Gesamtreaktionszeit 24 beiträgt, ist die Busübertragungszeit auf dem Feldbus 13 zwischen DP-Slave und DP-Master, symbolisiert durch den Kreis 20. Die fehlersichere Übertragung und Bearbeitung der Signale in DP-Master und F-CPU, abhängig von der Zykluszeit der F-CPU, resultiert in einer weiteren Reaktionszeit 21. Ebenfalls berücksichtigt werden muss die Überwachungszeit der fehlersicheren Kommunikation zwischen DP-Eingangsmodul und F-CPU bzw. zwischen F-CPU und DP-Ausgangsmodul. Bis zur Ausgabe eines Ausgangssignals durch das DP-Ausgangsmodul fallen weitere Busübertragungszeiten 22, bzw. Bearbeitungszeiten 23 an. Die sicherheitsgerichtete Kommunikation benötigt dabei gegenüber einer nicht fehlersicheren Kommunikation zusätzliche Bearbeitungszeiten (verursacht z. B. durch so genannte F-Treiber). Die gesamte Reaktionszeit 24 ist im Beispielsfall sicherheitsrelevant und darf auf keinen Fall eine vorgegebene Prozessfehlertoleranzzeit überschreiten. Des Weiteren muss die Parametrierung des Systems einem offenen Standard genügen, so dass an diesem sicheren Feldbus unterschiedlichste Hersteller ihre Geräte betreiben können und das Engineering System 2 Ergebnisse mit definierter Sicherheit liefern kann. Das beschriebene sicherheitsgerichtete Automatisierungssystem wird beispielsweise zur Steuerung und Überwachung einer Presse eingesetzt. Ein nicht abgeschrankter Bereich der Presse wird dabei durch ein Lichtgitter überwacht. Bei Eindringen eines Gegenstands, z. B. einer Hand eines Anwenders, wird durch das Lichtgitter ein Signal erzeugt, welches durch das Eingangselement 5 erfasst wird. In diesem Fall wäre das sicherheitsrelevante Ausgangssignal des Ausgangselements 11 ein Stoppsignal zum sofortigen Anhalten der Presse. Zwischen Auslösen des Lichtgitters und Anhalten der Presse darf maximal eine zuvor definierte Zeit verstreichen, welche größer als die gesamte Reaktionszeit 24 des Steuerungssystems 1 ist. Aus Sicht des Personenschutzes darf z. B. eine maximale Reaktionszeit von 100 ms nicht überschritten werden.

Die Komponenten 5 - 11 des Steuerungssystems 1 enthalten in Speichermitteln die jeweils relevanten Reaktionszeiten. Das Eingangselement 5 bzw. der Sensor enthält die drei Reaktionszeiten "maximale Reaktionszeit im Fehlerfall", "maximale Reaktionszeit im fehlerfreien Fall" sowie "typische Reaktionszeit". Diese Reaktionszeiten sind von den eingestellten Parametern abhängig, z. B. von der geforderten Sicherheitskategorie (z. B. SIL), Aktivierung der Querschlussüberwachung, etc. Der Hersteller der Komponenten gibt alle Reaktionszeiten in Abhängigkeit von den möglichen Parametern an. So haben z. B. digitale fehlersichere Eingabeelemente (sogenannte F-DI-Baugruppen) eine typische Fehler-Reaktionszeit von 20 ms und eine maximale Fehlerreaktionszeit von 56 ms.

Für die Kommunikation zwischen Eingangselement 5 und F-CPU ist die "maximale Reaktionszeit im Fehlerfall" gleich der Überwachungszeit, z. B. der PROFIsafe-Timeout-Zeit (siehe FIG 2). Die minimale Überwachungszeit ergibt sich aus den Bus-Parametern, der Reaktionszeit der F-CPU und der Quittierungszeit der fehlersicheren Peripherie. Die "maximale Reaktionszeit im fehlerfreien Fall" und die "typische Reaktionszeit" können heute aus Busparametern errechnet werden.

Die "maximale Reaktionszeit im Fehlerfall" der F-CPU wird durch die Zykluszeitüberwachung und die Überwachungszeit, z. B. der PROFIsafe-Timeout-Zeit, bestimmt. Die "maximale Reaktionszeit im fehlerfreien Fall" setzt sich zusammen aus der maximalen Zykluszeit und der maximalen Programmlaufzeit. Die "typische Reaktionszeit" kann z. B. aus der halben Zykluszeit und der typischen Programmlaufzeit berechnet werden.

Für die Kommunikation zwischen F-CPU und Ausgangselement 11 ist die "maximale Reaktionszeit im Fehlerfall" gleich der Überwachungszeit, hier der PROFIsafe-Timeout-Zeit (siehe FIG 2). Die minimale Überwachungszeit ergibt sich aus den Bus-Parametern, der Reaktionszeit der F-CPU und der Quittierungszeit der Peripherie. Die "maximale Reaktionszeit im fehlerfreien Fall" und die "typische Reaktionszeit" können heute aus Busparametern errechnet werden.

Das Ausgangselement 11 bzw. der Aktor enthält die drei Reaktionszeiten "maximale Reaktionszeit im Fehlerfall", "maximale Reaktionszeit im fehlerfreien Fall" sowie "typische Reaktionszeit". Diese Reaktionszeiten sind von den eingestellten Parametern abhängig, z. B. vom SIL, Aktivierung der Querschlussüberwachung, etc. Der Hersteller der Komponenten gibt alle Reaktionszeiten in Abhängigkeit von den möglichen Parametern an.

Alle gespeicherten Reaktionszeiten, auch Zeitparameter genannt, erhalten definierte und standardisierte Namen, die durch das Projektierungssystem 2 entschlüsselt und zur Berechnung herangezogen werden. Diese Namen werden z. B. in der GSD (Geräte-Stamm-Daten der Komponente) verwendet. Eine CRC (z. B. "F_Time_CRC") dient zur Überprüfung der Korrektheit der angegebenen Zeitparameter. Das Projektierungssystem 2 sammelt alle Daten der beteiligten Komponenten 5 - 11 (u. a. F-Eingabe, F-CPU, F-Ausgabe) und sucht diejenige Komponente 5 - 11 mit der größten "maximalen Reaktionszeit im Fehlerfall". Für diese Komponente wird diese "maximale Reaktionszeit im Fehlerfall" übernommen, für alle anderen Komponenten wird die "maximale Reaktionszeit im fehlerfreien Fall" für die Berechnung herangezogen. Das Projektierungssystem 2 beachtet dabei entsprechend der Sicherheitsvorgabe (z. B. SIL 2 oder SIL 3) automatisch ob von einem oder zwei Fehlern ausgegangen werden muss. Der Projekteur gibt die geforderte Gesamtreaktionszeit (F-Sensor bis F-Aktor) vor. Das Projektierungssystem 2 ermittelt, ob diese Zeit mit den benutzten Komponenten realisierbar ist. Wenn nicht erscheint eine entsprechende Meldung. Wenn die Zeit realisierbar ist verteilt das Projektierungssystem die beiden PROFIsafe-Timeout-Werte so, dass die Summe der Zeiten nach obiger Strategie die geforderte Gesamtreaktionszeit ergibt. Mit den differenzierter berechneten Werten ist eher der Nachweis möglich, dass die geforderte Prozessfehlertoleranzzeit eingehalten wird. Optional können Vorschläge zur Optimierung gemacht werden, z. B. wenn die Überwachungszeiten mit einem großen Puffer gewählt wurden. Darüber hinaus ist häufig zusätzlich die "typische Reaktionszeit" des Steuerungssystems 1 interessant. Dies ist im Allgemeinen die mittlere Reaktionszeit im fehlerfreien Fall. Die Ermittlung einer "typischen Reaktionszeit" eines sicherheitsgerichteten Steuerungssystems ist ein vollkommen neuer Ansatz.

FIG 2 zeigt die Kommunikation zwischen Komponenten eines Steuerungssystems. In der schematisch vereinfachten Darstellung der FIG 2 enthält das Steuerungssystem eine fehlersichere Eingabe (F-Eingabe 30), eine fehlersichere Zentraleinheit (F-CPU 31) sowie eine fehlersichere Ausgabeeinheit (F-Ausgabe 32). Die Kommunikation erfolgt über Telegramme 33 - 37 zwischen F-Eingabe 30 und F-CPU 31 bzw. über Telegramme 39 - 43 zwischen F-CPU 31 und F-Ausgabe 32. F-Eingabe 30, F-CPU 31 und F-Ausgabe 32 kommunizieren über einen zyklischen Bus. Weitere an der Kommunikation beteiligte Komponenten, wie z. B. DP-Master und DP-Slave sind hier der Einfachheit halber nicht dargestellt. Die aufgrund des zyklischen Busses wiederholte Übermittlung von Telegrammen wird durch die kleinen Pfeile 38 angedeutet. In der schematischen Darstellung entspricht die waagerechte Achse der räumlichen Ausdehnung des Steuerungssystems, die senkrechte Achse hingegen dem zeitlichen Ablauf. Der Ablauf der Kommunikation soll im Folgenden beispielhaft an der Kommunikation zwischen der F-Eingabe 30 und der F-CPU 31 erläutert werden. Am zeitlichen Beginn der hier dargestellten Kommunikation sendet die F-CPU 31 ein erstes Telegramm 33 an die F-Eingabe 30. Die F-Eingabe 30 erwidert dieses erste Telegramm 33 mit einem zweiten Telegramm 34. Das Telegramm 34 enthält eine Quittierung des ersten Telegramms 33 und eventuell weitere Informationen zur Weitergabe an die F-CPU 31. Zur Überwachung der Kommunikationsbeziehung zwischen F-Eingabe 30 und F-CPU 31 überwacht die F-CPU 31, ob während der Überwachungszeit 46 (typischer Wert z. B. 50 ms) nach Absenden des ersten Telegramms 33 eine dieses Telegramm quittierende Rückmeldung der F-Eingabe 30 erfolgt und von der F-CPU 31 empfangen wird. Ebenso wie die F-Eingabe 30 von der F-CPU 31 empfangene Telegramme 33, 35, 37 umgehend zu quittieren hat, quittiert auch die F-CPU 31 von der F-Eingabe 30 empfangene Telegramme 34, 36. Der Empfang des entsprechenden Quittierungssignals in einem Telegramm 35, 37 wird in der F-Eingabe 30 entsprechend während Überwachungszeiten 44 bzw. 45 überwacht. Entsprechend erfolgt die Kommunikation zwischen F-CPU 31 und F-Ausgabe 32. Auch werden die von F-Ausgabe 32 gesendeten Telegramme 39, 41 und 43 umgehend in von der F-CPU 31 gesendeten Telegrammen 40 bzw. 42 quittiert. Die entsprechenden Überwachungszeiten in F-CPU 31 und F-Ausgabe 32 sind mit den Bezugszeichen 47 bzw. 48 und 49 gekennzeichnet.

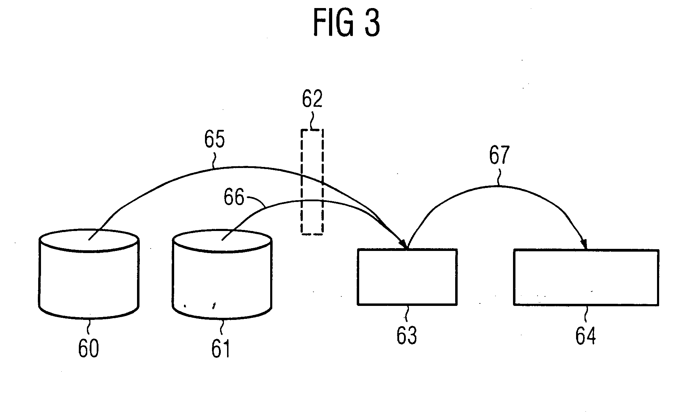

FIG 3 zeigt ein weiteres Ausführungsbeispiel eines Verfahrens zur Ermittlung einer Reaktionszeit. Bei dem hier dargestellten Ausführungsbeispiel wird das Verfahren durch ein Makro ausgeführt, welches in eine mit einem Tabellenkalkulationsprogramm ausführbare Datei eingebettet ist. Das Auslesen von durch ein Projektierungswerkzeug 61 bzw. durch Gerätestammdaten 60 bereitgestellten Daten über Programmierschnittstellen 62 (z. B. API = Application Programming Interface) wird mit den Bezugszeichen 66 bzw. 65 gekennzeichnet. Die ausgelesenen Daten werden durch das im Tabellenkalkulationsprogramm 63 ablaufende Makro ausgewertet. Zusätzlich werden die ebenfalls bereitgestellten Signaturen der Daten bzw. der Makros überprüft, so dass sichergestellt wird, dass die richtigen Daten zur Berechnung der Reaktionszeiten herangezogen wurden. Die so ermittelten Reaktionszeiten 67 werden durch geeignete Mittel 64 einem Anwender oder weiteren Applikationen zur Verfügung gestellt.

Zusammengefasst betrifft die Erfindung somit ein Verfahren sowie eine Vorrichtung zur Ermittlung mindestens einer Reaktionszeit 24 eines Steuerungssystems 1 sowie Eingangselemente 5, Ausgangselemente 11 oder weitere Komponenten 6 - 10 eines Steuerungssystems 1. Zur Vereinfachung der Ermittlung mindestens einer Reaktionszeit eines Steuerungssystems 1 wird vorgeschlagen, dass die Reaktionszeit 24 aus jeweils einem Eingangselement 5, einem Ausgangselement 11 und weiteren Komponenten 6 -10 des Steuerungssystems 1 zugeordneten Informationen 18 automatisch ermittelt wird, wobei die Reaktionszeit 24 die zwischen dem Erfassen eines Eingangssignals im Eingangselement 5 des Steuerungssystems 1 und der Ausgabe eines durch das Eingangssignal veranlassten Ausgangssignals durch das Ausgangselement 11 des Steuerungssystems 1 verstrichene Zeit umfasst.

## Patentansprüche

1. Verfahren zur Ermittlung mindestens einer Reaktionszeit (24) eines Steuerungssystems (1), wobei die Reaktionszeit (24) die zwischen dem Erfassen eines Eingangssignals in einem Eingangselement (5) des Steuerungssystems (1) und der Ausgabe eines durch das Eingangssignal veranlassten Ausgangssignals durch ein Ausgangselement (11) des Steuerungssystems (1) verstrichene Zeit umfasst, bei welchem Verfahren die Reaktionszeit (24) aus jeweils dem Eingangselement (5), dem Ausgangselement (11) und weiteren Komponenten (6 -10) des Steuerungssystems (1) zugeordneten Informationen (18) automatisch ermittelt wird.

2. Verfahren nach Anspruch 1,
**dadurch gekennzeichnet,**
**dass** eine sicherheitsrelevante Reaktionszeit eines sicherheitsgerichteten Steuerungssystems ermittelt wird.

3. Verfahren nach Anspruch 1 oder 2,
**dadurch gekennzeichnet,**
**dass** die Informationen (18) jeweils Reaktionszeiten oder eine Formel zur Berechnung von Reaktionszeiten des Eingangselements (5), des Ausgangselements (11) bzw. der weiteren Komponenten (6 - 10) des Steuerungssystems (1) enthalten.

4. Verfahren nach einem der vorhergehenden Ansprüche,
**dadurch gekennzeichnet,**
**dass** eine maximale Reaktionszeit des Steuerungssystems (1) im Fehlerfall und eine maximale Reaktionszeit des Steuerungssystems (1) im fehlerfreien Fall ermittelt wird.

5. Verfahren nach einem der vorhergehenden Ansprüche,
**dadurch gekennzeichnet,**
**dass** die Informationen (18) in Speichermitteln als Gerätestammdaten hinterlegt sind.

6. Verfahren nach einem der vorhergehenden Ansprüche,
**dadurch gekennzeichnet,**
**dass** die Informationen (18) jeweils eine maximale Reaktionszeit im Fehlerfall, eine maximale Reaktionszeit im fehlerfreien Fall sowie eine typische Reaktionszeit des Eingangselements (5), des Ausgangselements (11) bzw. der weiteren Komponenten (6 - 10) des Steuerungssystems (1) enthalten.

7. Verfahren nach einem der vorhergehenden Ansprüche,
**dadurch gekennzeichnet,**
**dass** den Informationen (18) Sicherheitsmittel zugeordnet werden.

8. Verfahren nach einem der vorhergehenden Ansprüche,
**dadurch gekennzeichnet,**
**dass** zur Ermittlung einer maximalen Reaktionszeit des Steuerungssystems (1) im Fehlerfall bei einer durch Sicherheitsanforderungen bestimmten Anzahl von Komponenten (5 - 11)des Steuerungssystems (1) jeweils die maximale Reaktionszeit der Komponente im Fehlerfall verwendet wird und bei den übrigen Komponenten jeweils die maximale Reaktionszeit der Komponenten im fehlerfreien Fall verwendet wird.

9. Verfahren nach einem der vorhergehenden Ansprüche,
**dadurch gekennzeichnet,**
**dass** zur Ermittlung einer maximalen Reaktionszeit des Steuerungssystems (1) im Fehlerfall die maximale Reaktionszeit im Fehlerfall der Komponente mit der im Vergleich größten maximalen Reaktionszeit im Fehlerfall verwendet wird und bei den übrigen Komponenten die maximale Reaktionszeit der Komponenten im fehlerfreien Fall verwendet wird.

10. Vorrichtung zur Ermittlung mindestens einer Reaktionszeit (24) eines Steuerungssystems (1), wobei die Reaktionszeit (24) die zwischen dem Erfassen eines Eingangssignals in einem Eingangselement (5) des Steuerungssystems (1) und der Ausgabe eines durch das Eingangssignal veranlassten Ausgangssignals durch ein Ausgangselement (11) des Steuerungssystems (1) verstrichene Zeit umfasst, wobei die Vorrichtung Mittel zur automatischen Ermittlung der Reaktionszeit (24) aus jeweils dem Eingangselement (5), dem Ausgangselement (11) und weiteren Komponenten (6 -10) des Steuerungssystems (1) zugeordneten Informationen (18) aufweist.

11. Vorrichtung nach Anspruch 10,
**dadurch gekennzeichnet,**
**dass** die Mittel zur automatischen Ermittlung einer sicherheitsrelevanten Reaktionszeit eines sicherheitsgerichteten Steuerungssystems vorgesehen sind.

12. Vorrichtung nach Anspruch 10 oder 11,
**dadurch gekennzeichnet,**
**dass** die Informationen (18) jeweils Reaktionszeiten oder eine Formel zur Berechnung von Reaktionszeiten des Eingangselements (5), des Ausgangselements (11) bzw. der weiteren Komponenten (6 - 10) des Steuerungssystems (1) enthalten.

13. Vorrichtung nach einem der Ansprüche 10 bis 12,
**dadurch gekennzeichnet,**
**dass** die Mittel zur automatischen Ermittlung einer maximalen Reaktionszeit des Steuerungssystems (1) im Fehlerfall und einer maximalen Reaktionszeit des Steuerungssystems (1) im fehlerfreien Fall vorgesehen sind.

14. Vorrichtung nach einem der Ansprüche 10 bis 13,
**dadurch gekennzeichnet,**
**dass** die Informationen (18) als Gerätestammdaten hinterlegt sind.

15. Vorrichtung nach einem der Ansprüche 10 bis 14,
**dadurch gekennzeichnet,**
**dass** die Informationen (18) jeweils eine maximale Reaktionszeit im Fehlerfall, eine maximale Reaktionszeit im fehlerfreien Fall sowie eine typische Reaktionszeit des Eingangselements (5), des Ausgangselements (11) bzw. der weiteren Komponenten (6 - 10) des Steuerungssystems (1) enthalten.

16. Vorrichtung nach einem der Ansprüche 10 bis 15,
**dadurch gekennzeichnet,**
**dass** den Informationen (18) Sicherheitsmittel zugeordnet sind.

17. Vorrichtung nach einem der Ansprüche 10 bis 16,
**dadurch gekennzeichnet,**
**dass** zur Ermittlung einer maximalen Reaktionszeit des Steuerungssystems (1) im Fehlerfall bei einer durch Sicherheitsanforderungen bestimmten Anzahl von Komponenten des Steuerungssystems jeweils die maximale Reaktionszeit der Komponente im Fehlerfall zur Verwendung vorgesehen ist und bei den übrigen Komponenten jeweils die maximale Reaktionszeit der Komponenten im fehlerfreien Fall zur Verwendung vorgesehen ist.

18. Vorrichtung nach einem der Ansprüche 10 bis 17,
**dadurch gekennzeichnet,**
**dass** zur Ermittlung einer maximalen Reaktionszeit des Steuerungssystems (1) im Fehlerfall die maximale Reaktionszeit im Fehlerfall der Komponente mit der im Vergleich größten maximalen Reaktionszeit im Fehlerfall zur Verwendung vorgesehen ist und bei den übrigen Komponenten die maximale Reaktionszeit der Komponenten im fehlerfreien Fall zur Verwendung vorgesehen ist.

19. Eingangselement (5), Ausgangselement (11) oder weitere Komponente (6 - 10) eines Steuerungssystems (1), mit diesen Komponenten (5 - 11) zugeordneten Informationen (18), welche zur automatischen Ermittlung mindestens einer Reaktionszeit (24) des Steuerungssystems (1) verwendbar sind, wobei die Reaktionszeit die zwischen dem Erfassen eines Eingangssignals im Eingangselement (5) des Steuerungssystems (1) und der Ausgabe eines durch das Eingangssignal veranlassten Ausgangssignals durch das Ausgangselement (11) des Steuerungssystems (1) verstrichene Zeit umfasst.
